# EUROPÄISCHE PATENTSCHRIFT

(11) **EP 0 333 638 B1**
(45) Veröffentlichungstag und Bekanntmachung des Hinweises auf die Patenterteilung: **02.02.1994**
(21) Anmeldenummer: 89730071.1
(22) Anmeldetag: 15.03.1989
(51) Int. Cl.: G03B 17/14, G02B 7/10, G03B 3/00

(54) **Makro-Objektiv**
Macro-lens
Objectif macro

(30) Priorität: 16.03.1988 AT 706/88
(43) Veröffentlichungstag der Anmeldung: 20.09.1989
(73) Patentinhaber: ARNOLD & RICHTER CINE TECHNIK GMBH & CO. BETRIEBS KG., D-80799 München (DE); ARRI CINE & VIDEO GERÄTE GESELLSCHAFT M.B.H., A-1150 Wien (AT)
(72) Erfinder: Hohenecker, Harald, A-1120 Wien (AT)
(74) Vertreter: Ninnemann, Detlef, Dipl.-Ing.

(56) Entgegenhaltungen:
- DE-A- 2 721 017
- US-A- 4 130 340
- US-A- 4 490 018

## Beschreibung

Die Erfindung betrifft ein Makro-Objektiv mit einem ein Linsensystem umfassenden Objektivgehäuse, in dem ein Entfernungsring mit einer Skala koaxial zur Objektivachse drehbar gelagert ist.

Bei Makro-Objektiven ist es erforderlich, den Entfernnungsring für eine ausreichende Skalenauflösung um über 360° verdrehbar auszubilden. Um nach einer ganzen Umdrehung von 360° die entsprechende Skala richtig zuordnen zu können, ist es bekannt, die Entfernungsskala in verschiedenen Farben auszubilden, und einem mehrfarbigen Indexstrich gegenüberzustellen. Dabei tritt jedoch die Schwierigkeit auf, daß bei einer Einstellung des Entfernungsringes die Farben richtig zugeordnet werden müssen. Dies kann insbesondere bei einer raschen und weniger konzentrierten Einstellung zu fehlerhaften Schärfeneinstellungen führen, und ist bei schlechten Lichtverhältnissen wegen der verminderten Farbwahrnehmung des menschlichen Auges kaum möglich.

Bei Makro-Objektiven wurde zur Ermöglichung einer großen Verschiebung des Objektives bzw. der Objektivelemente und eienr Objektivfassung oder eines Objektivtubusses durch die DE-OS 27 21 017 auch schon vorgeschlagen, je einen Einstellring zu beiden Seiten eines feststehenden Teiles der Objektivfassung vorzusehen, welche Einstellringe je einem Schneckenmechanismus zugeordnet sind. Dab i dient der eine Schneckenmechanismus zur Verschiebung des Objektives und der andere zur Verschiebung der Kamera, wodurch die Verschiebestrecke bzw. der Auszug der Kamera gegenüber dem Objektiv verdoppelt wird.

Der Erfindung liegt die Aufgabe zugrunde, ein Makro-Objektiv der eingangs genannten Art zu schaffen, mit dem bei relativ geringem konstruktiven Mehraufwand die Entfernungen im gesamten zur Verfügung stehenden Bereich präzise und komfortabel einstellbar sind.

Diese Aufgabe wird erfindungsgemäß dadurch gelöst, daß wenigstens zwei koaxial innerhalb des Gehäuses angeordnete und ineinander gesteckte Entfernungsringe vorgesehen sind, wobei lediglich der radial innerste Entfernungsring durch eine ringförmige Gehäuseöffnung unter Bildung eines Mitnehmerringes an die Gehäuseaußenseite geführt ist und daß die an den innersten Entfernungsring anschließenden Entfernungsringe über eine bei tangentialem Druck selbsttätig lösbare Mitnahmevorrichtung mit dem innersten Entfernungsring drehverbunden sind und daß sowohl das Objektivgehäuse als auch die an den radial innersten Entfernungsring anschließenden Entfernungsringe jeweils ein Sichtfenster aufweisen.

Mit einer derartigen konstruktiv relativ einfachen Lösung ist ein Übergang - und problemloser Wechsel von einem zum nächsten Entfernungsring möglich. Auf diese Weise ist dem Indexstrich in vorteilhafter Weise immer nur eine einzige Entfernungsangabe auf dem gerade vom Sichtfenster des Objektivgehäuses erblickbaren Entfernungsring zugeordnet, so daß auch bei flüchtiger und weniger konzentrierter Betätigung des Entfernungsringes eine falsche Einstellung praktisch ausgeschlossen ist.

Als weiterer Vorteil ist nunmehr eine sehr praktische farbliche Abstufung des gesamten Entfernungsbereiches möglich, in dem z.B. die Entfernungsringe im Bereich von unendlich bis einem Meter blau, im anschließenden Bereich grün und im ganz speziellen Makrobereich rot ausgebildet werden. Damit ist ein besonders rasches Auffinden des gerade gewünschten Entfernungsbereiches mit einer anschließenden, nunmehr lediglich in einem kleinen Bereich durchzuführenden genauen Entfernungseinstellung möglich.

Eine vorteilhafte Weiterbildung der Erfindung besteht darin, daß am radial innersten Entfernungsring an dessen radialer Außenseite und an der Gehäuseinnenseite jeweils ein Anschlag angeordnet ist, die in einem der tangentialen Breite der Sichtfenster entsprechenden Abstand in tangentialer Richtung zueinander versetzt sind, wobei zwischen diesen beiden Anschlägen die mit dem zweiten Entfernungsring verbundene Mitnahmevorrichtung vorgesehen ist.

Mit dieser Ausführung ist der Beginn der Entfernungsskala auf dem radial äußeren Entfernungsring vorgesehen. Dieser wird über die Mitnahmevorrichtung vom radial inneren Entfernungsring, der über den an der Gehäuseaußenseite vorgesehenen Mitnehmerring verdrehbar ist, mitgeschleppt. Nach einer Umdrehung vom 360° minus der tangentialen Breite des Sichtfensters erscheint im radial äußeren Entfernungsring ein weiters Sichtfenster, so daß nunmehr die Skala auf dem radial inneren Entfernungsring sichtbar ist. Der radial äußere Entfernungsring wird durch den Anschlag der Mitnahmevorrichtung auf dem mit der Gehäuseinnenseite verbundenen Anschlag festgehalten, wobei sich die Entfernungsskala nahtlos auf dem inneren Entfernungsring fortsetzt.

Die Sichtfenster sind gemäß einer weiteren bevorzugten Ausführungsform der Erfindung in einer Drehrichtung der Entfernungsringe unmittelbar hintereinander versetzt angeordnet. Auf diese Weise ist eine übergangslose Fortsetzung der Entfernungsskala mit einer optimalen Ausnützung der Radialaußenseite der Entfernungsringe für die Anbringung der Skala möglich.

Gemäß einer weiteren vorteilhaften Ausbildungsvariante der Erfindung ist vorgesehen, daß die Mitnahmevorrichtung als in radialer Richtung doppelseitig wirkende Kugelraste ausgebildet ist, die in der durch die Berührung der beiden Anschläge mit der Mitnahmevorrichtung gekennzeichneten Dreh-Anfangstellung in eine erste Kerbe des radial innersten Entfernungsringes einrastet, wobei eine an der Gehäuseinnenseite vorgesehene weitere Kerbe in einem der Breite der Sichtfenster entsprechenden tangentialen Abstand zur ersten Kerbe versetzt angeordnet ist.

Auf diese Weise ist die Dreh-Anfangsstellung des Mitnehmerringes durch einen nicht übergehbaren Anschlag fixiert. Die Betätigung des Mitnehmerringes zur Entfernungseinstellung ist somit nur in einer Richtung möglich, bei der der Anschlag des radial inneren Entfernungsringes vom Anschlag des Objektivgehäuses wegbewegt wird. Durch die entsprechende Distanzierung der beiden Kerben zueinander ist sichergestellt, daß das Sichtfenster des radial äußeren Entfernungsringes nach einer Umdrehung genau unterhalb des im Objektivgehäuse befindlichen Sichtfensters zu liegen kommt.

In vorteilhafter Weise kann entsprechend einer weiteren Ausbildungsform der Erfindung die Mitnahmevorrichtung als Permanentmagnet ausgebildet sein, wobei dieser Magnet gemeinsam mit seinen Polschuhen mit dem an das Gehäuse anschließenden Entfernungsring verbunden ist und mit Jochen aus ferromagnetischem Material, die an den mit der Gehäuseinnenseite bzw. dem radial innersten Entfernungsring verbundenen Anschlägen angebracht sind, zusammenwirkt. Eine derartige Mitnahmevorrichtung ist unter Vermeidung von Kerben relativ einfach und praktisch nicht störungsanfällig.

Schließlich besteht noch eine weitere vorteilhafte Ausführungsform der Erfindung darin, daß drei Entfernungsringe vorgesehen sind, die jeweils über Mitnahmevorrichtungen mit dem radial innersten Entfernungsring drehverbunden sind. Mit einer derartigen konstruktiven Lösung ist eine besonders hohe Skalenauflösung möglich, so daß eine besonders genaue Entfernungseinstellung durchführbar ist.

Im folgenden wir die Erfindung an Hand von in der Zeichnung dargestellten Ausführungsbeispielen näher beschrieben. Es zeigen:
- Figur 1: einen Längsquerschnitt durch ein erfindungsgemäß ausgebildetes Makro-Objektiv,
- Figuren 2, 4 und 6: jeweils einen schematisch dargestellten Querschnitt durch das Makro-Objektiv gemäß der Linie II in Figur 1,
- Figuren 3, 5 und 7: ebenfalls einen schematischen Querschnitt durch das Makro-Objektiv gemäß der Linie III in Figur 1,
- Figuren 8 bis 11: jeweils einen schematischen Querschnitt durch ein weiteres Ausführungsbeispiel eines erfindungsgemäß ausgebildeten Makro-Objektives mit drei zueinander verdrehbaren Entfernungsringen,
- Figur 12: einen schematischen Querschnitt durch die Entfernungsringe mit einer als Magnet ausgebildeten Mitnahmevorrichtung und
- Figur 13: einen schematisch dargestellten Querschnitt durch den Magnet gemäß der Linie IV in Figur 12.

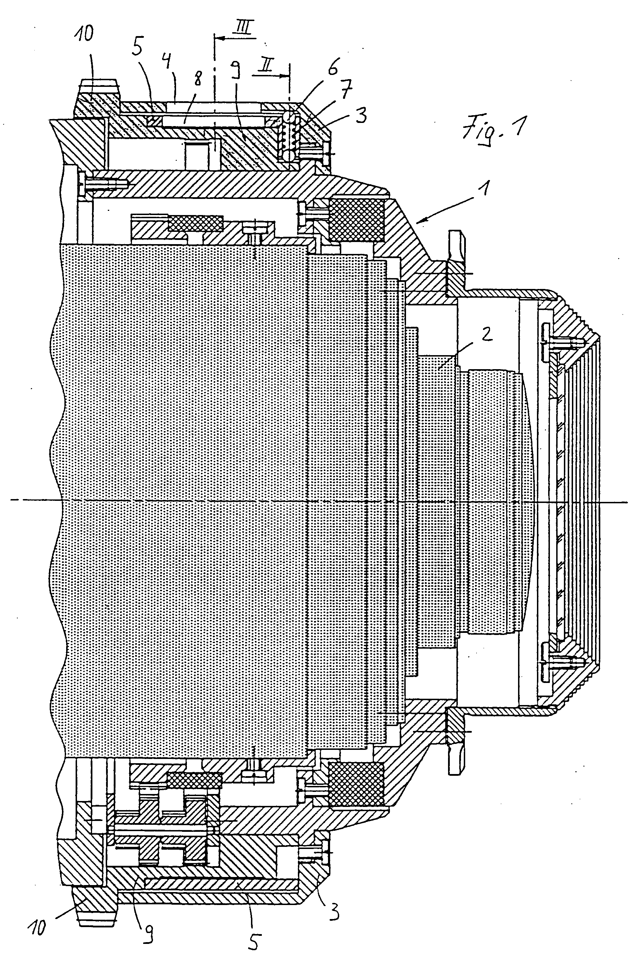

Ein in Figur 1 ersichtliches Makro-Objektiv 1 besteht aus einem ein nicht näher dargestellten Linsensystem 2 umfassenden Gehäuse 3, das ein Sichtfenster 4 aufweist. Unmittelbar unterhalb des Gehäuses 3 ist ein radial äußerer Entfernungsring 5 mit einer als Kugelraste 6 ausgebildeten Mitnahmevorrichtung 7 vorgesehen. Innerhalb dieses ein Sichtfenster 8 sowie an seiner Radialaußenseite eine Entfernungsskala aufweisenden Entfernungsringes 5 ist noch ein weiterer Entfernungsring 9 im Gehäuse 3 drehbar gelagert. Dieser radial innere Entfernungsring 9 ist über einen Mitnehmerring 10 von Hand aus verdrehbar.

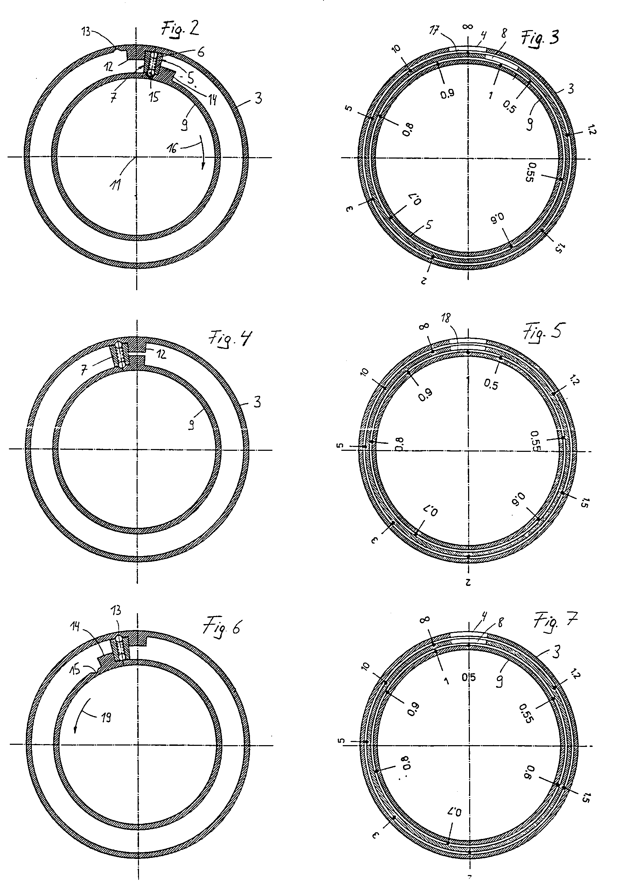

Wie insbesondere aus den Figuren 2 bis 7 ersichtlich ist, sind die beiden Entfernungsringe 5 und 9 koaxial zur Objektivachse 11 angeordnet. Das Obejektivgehäuse 3 weist an seiner Innenseite einen Anschlag 12 sowie eine Kerbe 13 auf. Der radial innere Entfernungsring 9 weist an seiner Außenseite ebenfalls einen Anschlag 14 sowie eine Kerbe 15 auf. In Figur 2 ist die Anfangs-Drehstellung gezeichnet, bei der die beiden Anschläge 12 und 14 an die Mitnahmevorrichtung 7 anliegen. Bei dieser Anfangs-Drehstellung ist lediglich eine Verdrehung des inneren Entfernungsringes 9 mit Hilfe des Mitnehmerringes 10 in Richtung eines Pfeiles 16 möglich.

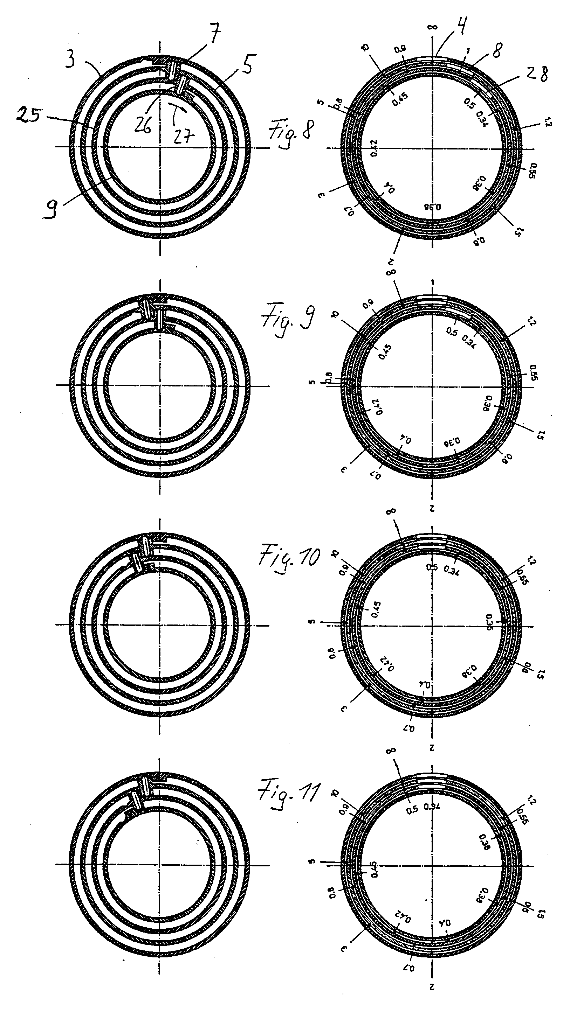

Die Entfernungseinstellung erfolgt nun in der Weise, daß der Mitnehmerring 10 und damit der radial innere Entfernungsring 9 in Richtung des Pfeiles 16 verdreht wird. Dies hat zur Folge, daß die in die Kerbe 15 eingerastete Kugelraste 6 mit samt dem radial äußeren Entfernungsring 5 mitbewegt wird. Dabei erscheint, wie insbesondere Figur 3 aufzeigt, im Sichtfenster 4 des Gehäuses 3 die auf der radialen Außenseite des äußeren Entfernungsringes 5 aufgebrachte Entfernungsskala 17. Nach einer Umdrehung von etwas weniger als 360° rastet die radial äußere Kugelraste 6 in die Kerbe 13 des Gehäuses 3 ein, wobei die Mitnahmevorrichtung 7 gleichzeitig auch zur Anlage an den Anschlag 12 des Gehäuses 3 kommt (Fig. 4). In dieser Position ist - wie Fig. 5 zeigt - das Sichtfenster 8 des äußeren Entfernungsringes 5 deckungsgleich unterhalb des Sichtfensters 4 des Gehäuses 3 angeordnet, wobei nunmehr die Entfernungsskala 18 auf der Radialaußenseite des inneren Entfernungsringes 9 sichtbar wird.

Wird nunmehr der Entfernungsring 9 weiter in Richtung des Pfeiles 16 verdreht, so rastet die radial innere Kugelraste 6 der Mitnahmevorrichtung 7 aus der Kerbe 15 aus, so daß lediglich der innere Entfernungsring 9 bewegt wird. In Fig. 6 ist die Drehendstellung dargestellt, bei der das Ende der Skala 18 erreicht ist und der Anschlag 14 des inneren Entfernungsringes 9 an die ebenfalls an den Anschlag 12 des Gehäuses 3 anliegende Mitnahmevorrichtung 7 anliegt.

Wird nunmehr der Mitnehmerring 10 entgegen der Anfangsdrehrichtung in Richtung des Pfeiles 19 (Fig. 6) zurückgedreht, so bleibt der radial äußere Entfernungsring 5 über die radial äußere Kugelraste in der Kerbe 13 des Gehäuses 3 eingerastet und somit unbeweglich, bis die Kerbe 15 des inneren Entfernungsringes 9 in die Kugelraste 6 einrastet und somit den äußeren Entfernungsring 5 mitnimmt.

Im Ausführungsbeispiel nach den Fig. 8 bis 11 ist noch eine weiterer Entfernungsring 25 vorgesehen, der zwischen dem radial äußeren Entfernungsring 5 und dem radial inneren Entfernungsring 9 liegt. Der radial innere Entfernungsring 9 wird über einen nicht dargestellten Mitnehmerring von Hand aus in Richtung des Pfeiles 27 verdreht. Dabei ist er über die Mitnahmevorrichtungen 7 und 26 mit den radial äußeren Entfernungsringen 25 und 5 drehverbunden, so daß diese ebenfalls in Richtung des Pfeiles 27 verdreht werden. Dabei erscheint zunächst im Sichtfenster 4 des Gehäuses die Entfernungsskala des äußersten Entfernungsringes 5. Sobald die Mitnahmevorrichtung 7 an den Anschlag des Gehäuses anliegt, liegt das Sichtfenster 8 deckungsgleich unter dem Sichtfenster 4, so daß nunmehr die Entfernungsskala auf dem zweiten Entfernungsring 25 sichtbar wird. Dieser Entfernungsring weist ebenfalls ein Sichtfenster 28 auf, das nach einer Umdrehung deckungsgleich unterhalb der beiden Sichtfenster 4 und 8 zu liegen kommt, so daß bei einer Weiterdrehung die auf dem innersten Entfernungsring 9 aufgebrachte Entfernungsskala sichtbar wird.

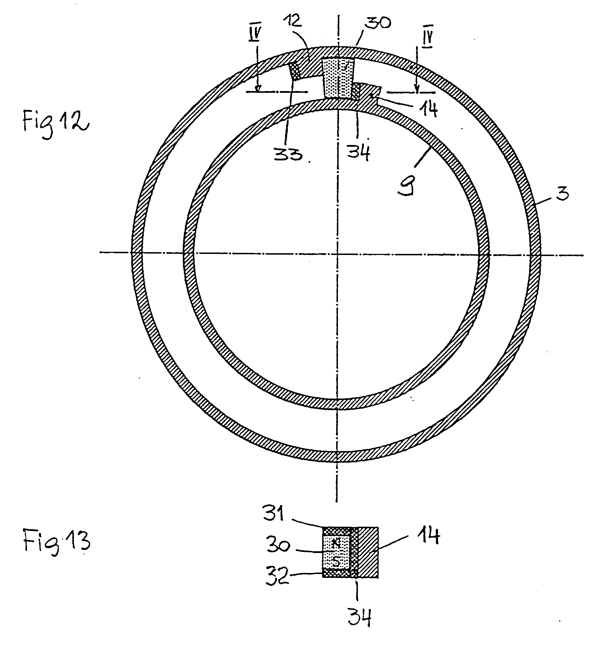

Wie in Fig. 12 ersichtlich, ist sowohl mit dem Anschlag 12 als auch mit dem Anschlag 14 jeweils ein Joch aus ferromagnetischem Material 33, 34 verbunden. Die mit dem radial äußeren Entfernungsring 5 verbundene Mitnahmevorrichtung ist als Permanentmagnet 30 ausgebildet, der wie in Fig. 13 ersichtlich mit Polschuhen 31, 32 versehen sein kann. Dieser Magnet bildet mit den Jochen jeweils einen magnetischen Kreis und bewirkt durch die in diesem Kreis auftretende Anziehungskraft die Mitnahme.

## Patentansprüche

1. Makro-Objektiv (1) mit einem ein Linsensystem umfassenden Objektivgehäuse (3), in dem ein Entfernungsring mit einer Skala koaxial zur Objektivachse drehbar gelagert ist,
**dadurch gekennzeichnet,**
daß zumindest zwei koaxial innerhalb des Gehäuses (3) angeordnete und ineinandergesteckte Entfernungsringe (5, 9; 5, 25, 9) vorgesehen sind, von denen lediglich der radial innerste Entfernungsring (9) durch eine ringförmige Gehäuseöffnung unter Bildung eines Mitnehmerringes (10) an die Gehäuseaußenseite geführt ist, daß die an den innersten Entfernungsring (9) anschließenden Entfernungsringe (5; 25) über eine bei tangentialem Druck selbsttätig lösbare Mitnahmevorrichtung (7) mit dem innersten Entfernungsring (9) drehverbunden sind und daß sowohl das Objektivgehäuse (3) als auch die an den radial innersten Entfernungsring (9) anschließenden Entfernungsringe (5; 25) jeweils ein Sichtfenster (4, 8, 28) aufweisen.

2. Makro-Objektiv nach Anspruch 1, **dadurch gekennzeichnet,** daß am radial innersten Entfernungsring (9) an dessen radialer Außenseite und an der Gehäuseinnenseite jeweils ein Anschlag (14, 12) angeordnet ist, die in einem der tangentialen Breite der Sichtfenster (4, 8) entsprechenden Abstand in tangentialer Richtung zueinander versetzt sind, wobei zwischen diesen beiden Anschlägen (14, 12) die mit dem zweiten Entfernungsring (5) verbundene Mitnahmevorrichtung (7) vorgesehen ist.

3. Makro-Objektiv nach Anspruch 1 oder 2, **dadurch gekennzeichnet,** daß die Sichtfenster (4, 8) in einer Drehrichtung der Entfernungsringe (9, 5) unmittelbar hintereinander versetzt angeordnet sind.

4. Makro-Objektiv nach einem der vorangehenden Ansprüche, **dadurch gekennzeichnet,** daß die Mitnahmevorrichtung (7) als in radialer Richtung doppelseitig wirkende Kugelraste (6) ausgebildet ist, die in der durch die Berührung der beiden Anschläge (12, 14) mit der Mitnahmevorrichtung (7) gekennzeichneten Dreh-Anfangsstellung in eine erste Kerbe (15) des radial inneren Entfernungsringes (9) einrastet, wobei eine an der Gehäuseinnenseite vorgesehene weitere Kerbe (13) in einem der Breite der Sichtfenster (4, 8) entsprechenden tangentialen Abstand zur ersten Kerbe (15) versetzt angeordnet ist.

5. Makro-Objektiv nach einem der Ansprüche 1-3, **dadurch gekennzeichnet,** daß die Mitnahmevorrichtung (7) als Permanentmagnet (30) ausgebildet ist, wobei dieser Magnet gemeinsam mit seinen Polschuhen (31, 32) mit dem an das Gehäuse anschließenden Entfernungsring (5) verbunden ist und mit Jochen aus ferromagnetischem Material (33, 34), die an den mit der Gehäuseinnenseite bzw. dem radial innersten Entfernungsring verbundenen Anschlägen (12, 14) angebracht sind, zusammenwirkt.

6. Makro-Objektiv nach Anspruch 1, **dadurch gekennzeichnet,** daß drei Entfernungsringe (5, 25, 9) vorgesehen sind, die jeweils über Mitnahmevorrichtungen (7, 26) mit dem radial innersten Entfernungsring (9) drehverbunden sind.

## Claims

1. Macro lens (1) with a lens housing (3) surrounding a lens system and in which a distance ring with scale is mounted for rotation coaxial with the lens axis,
characterised in that
at least two distance rings (5,9;5,25,9) are provided fitted inside each other coaxially inside the housing (3) of which only the radially innermost distance ring (9) is guided through a ring-like housing opening to the outside of the housing forming an entrainment ring (10), that the distance rings (5;25) adjoining the innermost distance ring (9) are connected rotationally to the innermost distance ring (9) by an entrainment device (7) which is automatically released with tangential pressure, and that both the lens housing (3) and the distance rings (5;25) adjoining the radially innermost distance ring (9) each have a view window (4,8,28).

2. Macro lens according to claim 1 characterised in that on the radially innermost distance ring (9) on its radial outside and on the inside of the housing there are stops (14,12) which are off-set relative to each other in the tangential direction at a distance corresponding to the tangential width of the view window (4,8) wherein the entrainment device (7) connected to the second distance ring (5) is provided between these two stops (12,14).

3. Macro lens according to claim 1 or 2 characterised in that the view windows (4,8) are arranged off-set one directly behind the other in a turning direction of the distance rings (9,5).

4. Macro lens according to one of the preceding claims, characterised in that the entrainment device (7) is designed as a ball ratchet (6) acting both sides in the radial direction and engaging in a first notch (15) of the radially inner distance ring (9) in the turning starting position characterised by the contact of the two stops (12, 14) with the entrainment device (7) wherein a further notch (13) provided on the inside of the housing is arranged off-set relative to the first notch (15) at a tangential distance corresponding to the width of the view window (4,8).

5. Macro lens according to one of claims 1 to 3 characterised in that the entrainment device (7) is designed as a permanent magnet (30) wherein this magnet is connected together with its pole shoes (31,32) to the distance ring (5) adjoining the housing and interacts with yokes of ferromagnetic material (33,34) which are attached to the stops (12,14) connected to the inside of the housing and the radially innermost distance ring.

6. Macro lens according to claim 1 characterised in that three distance rings (5, 25, 9) are provided which are each connected rotationally to the radially innermost distance ring (9) by entrainment devices (7,26).

## Revendications

1. Objectif macro (1) avec un boîtier d'objectif (3) comprenant un système de lentilles dans lequel est montée, avec possibilité de rotation et coaxialement par rapport à l'axe de l'objectif, une bague de réglage de distance avec une graduation, caractérisée en ce qu'au moins deux bagues de réglage de distance (5, 9; 5, 25, 9) sont disposées coaxialement dans le boîtier (3) et sont insérées l'une dans l'autre tandis que seule la bague de réglage de distance (9) radialement intérieure est guidée sur la face extérieure du boîtier par un orifice de boîtier annulaire en formant une bague d'entraînement (10), en ce que les bagues de réglage de distance (5, 25) se raccordant à la bague de réglage de distance intérieure (9) sont assemblées avec possibilité de rotation à la bague de réglage de distance intérieure (9) par un dispositif d'entraînement (7) automatiquement déconnectable par une pression tangentielle et en ce que tant le boîtier de l'objectif (3) que les bagues de réglage de distance (5, 25) se raccordant à la bague de réglage de distance radialement intérieure (9) présentent chacune une fenêtre de contrôle (4, 8, 28).

2. Objectif macro selon la revendication 1, caractérisé en ce que, sur la bague de réglage de distance radialement intérieure (9), est disposée une butée (14, 12) sur la face radialement extérieure de celle-ci ainsi que sur la face intérieure du boîtier, lesdites butées étant décalées l'une par rapport à l'autre en direction tangentielle d'une distance correspondant à la largeur tangentielle des fenêtres de contrôle (4, 8) tandis que, entre ces deux butées (14, 12), est prévu le dispositif d'entraînement (7) assemblé à la deuxième bague de réglage de distance (5).

3. Objectif macro selon la revendication 1 ou 2, caractérisé en ce que les fenêtres de contrôle (4, 8) sont disposées avec décalage immédiatement l'une derrière l'autre dans un sens de rotation des bagues de réglage de distance (9, 5).

4. Objectif macro selon l'une des revendications précédentes, caractérisé en ce que le dispositif d'entraînement (7) est constitué par un cliquet à billes (6) agissant des deux côtés en direction radiale qui s'engage dans une première encoche (15) de la bague de réglage de distance radialement intérieure (9) dans la position de rotation initiale caractérisée par le contact des deux butées (12, 14) avec le dispositif d'entraînement (7), tandis qu'une autre encoche (13), prévue sur la face intérieure du boîtier, est disposée avec un décalage par rapport à la première encoche (15) sur une distance tangentielle correspondant à la largeur des fenêtres de contrôle (4, 8).

5. Objectif macro selon l'une des revendications 1 à 3, caractérisé en ce que le dispositif d'entraînement (7) est constitué par un aimant permanent (30), ledit aimant étant assemblé avec ses pièces polaires (31, 32) à la bague de réglage de distance se raccordant au boîtier et coopérant avec des culasses en matériau ferromagnétique (33, 34) qui sont montées sur les butées (12, 14) assemblées respectivement à la face intérieure du boîtier et à la bague de réglage de distance radialement intérieure.

6. Objectif macro selon la revendication 1, caractérisé en ce que trois bagues de réglage de distance (5, 25, 9) sont prévues, chacune d'entre elles étant assemblée avec possibilité de rotation à la bague de réglage de distance radialement intérieure (9) par l'intermédiaire de dispositifs d'entraînement (7, 26).
